# EUROPÄISCHE PATENTSCHRIFT

(11) **EP 2 271 858 B1**
(45) Veröffentlichungstag und Bekanntmachung des Hinweises auf die Patenterteilung: **08.04.2020**
(21) Anmeldenummer: 09735460.9
(22) Anmeldetag: 17.04.2009
(51) Int. Cl.: F16H 1/28, F16H 3/72, F16H 37/08

(54) **GETRIEBE MIT ZWEI EINTREIBENDEN WELLEN UND EINEM PLANETENGETRIEBE ALS ÜBERLAGERUNGSGETRIEBEEINRICHTUNG**
TRANSMISSION AND DIFFERENTIAL DEVICE
TRANSMISSION ET SYSTÈME D'ENGRENAGE DIFFÉRENTIEL

(30) Priorität: 25.04.2008 CZ 20080258
(43) Veröffentlichungstag der Anmeldung: 12.01.2011
(60) Teilanmeldung: 10010500.6
(73) Patentinhaber: SEW-EURODRIVE GmbH & Co. KG, 76646 Bruchsal (DE)
(72) Erfinder: DOLEJS, Jiri, 330 13 Trnová 275 (CZ); PENKAVA, Josef, 301 00 Plzen (CZ)
(86) Internationale Anmeldenummer: PCT/EP2009/002820
(87) Internationale Veröffentlichungsnummer: WO 2009/129966

(56) Entgegenhaltungen:
- EP-A2- 1 482 210
- WO-A1-99/06738
- DE-A1- 3 640 146
- GB-A- 1 305 393
- GB-A- 1 558 033
- US-A1- 2007 149 348

## Beschreibung

Die Erfindung betrifft eine **Getriebemotoranordnung.** Dabei umfasst letztere einen Ausgleichsmechanismus mit dem Planetenräderwerk in Verbindung mit den Getriebestufen in den langsam laufenden Leistungsantrieben der Maschineneinrichtungen mit der Möglichkeit der Installation in den Betrieben verschiedener Industriezweige.

Es ist bekannt, bei industriellen Antrieben, Leistungsgetriebe mit Umlaufrädergetriebestufen einzusetzen, die aber mit konstanter Übersetzung benutzt werden. Unter solchen Leistungsgetrieben werden Getriebe für Antriebe mit mehr als 100kW oder gar mehr als 1MW verstanden.

**Aus der** US2007/149348 A1 **ist ein Planetengetriebe bekannt, bei dem zwei Drehmomentflüsse überlagert werden. Dabei ist eine Überlagerungsgetriebeeinrichtung vorhanden und es werden somit Drehmomentflüsse zusammenführbar. Eine erste eintreibende Welle treibt dabei ein Zentralrad eines Planetenräderwerks an. Aus der** GB 1 558 033 A1 **ist ein Differentialgetriebe bekannt, wobei das dortige Sonnenrad radial nur durch die Planetenräder geführt wird und die zum Sonnenrad gehörige Welle axial und radial bewegbar mit einer Nabe verbunden ist.**

Aus der WO 99/06738 A1 ist ein elektromechanisches Getriebe und insbesondere ein Planetengetriebemechanismus mit fünf Gliedern und drei Planetengetriebesätzen bekannt.

Der Erfindung liegt die Aufgabe zugrunde, Getriebe in kostengünstiger Weise weiterzubilden, insbesondere die Sicherheit in Anlagen zu erhöhen.

Die Aufgabe wird gelöst durch das Getriebemotoranordnung nach den in Anspruch 1

Von Vorteil ist dabei, dass **die Erfindung bei einem industriellen Antrieb einsetzbar ist und** ein Ausgleichsmechanismus geschaffen ist, durch welchen toleranzbedingte oder fehlstellungsbedingte Kräfte ableitbar sind. Insbesondere ist ein Antreiben des Getriebes durch einen Hauptantrieb und einen Zusatzantrieb ermöglicht, wodurch die Sicherheit bei Ausfall eines der Antriebe erhöht ist. Die von den Antrieben erzeugten Leistungsflüsse sind mittels des Überlagerungsgetriebes zusammenführbar auf nachfolgende Stirnradstufen. Somit ist eintriebseitig ein Differentialgetriebemechanismus mit Ausgleichsmechanismus anordenbar und dabei variable hohe Übersetzungen sind erreichbar.

Weiterer Vorteil ist bei der Erfindung, dass eine gleichmäßige Gabelung der Leistung an die einzelnen Umlaufräder, erreichbar ist.

Bei weiteren erfindungsgemäßen Ausgestaltungen sind die Umlaufräder als Stufenplaneten ausgeführt, wobei das Zentralrad mit der ersten Verzahnungsstufe der Stufenplaneten und ein weiteres, abtriebseitigeres Teil mit der zweiten Verzahnungsstufe der Stufenplaneten im Eingriff ist. Von Vorteil ist dabei, dass ein weiterer Bereich von Übersetzungen erreichbar ist.

Bei weiteren erfindungsgemäßen Ausgestaltungen ist das Zentralrad im ersten axialen Bereich der ersten eintreibenden Welle angeordnet und ist dort drehfest mit dieser verbunden oder einstückig ausgeführt. Von Vorteil ist dabei, dass die Welle über das Zentralrad lagerbar ist, also die Lagerung des Zentralrades über die Umlaufräder ausführbar ist und somit eine erste Lagerstelle für die Welle vorsehbar ist. Dabei wird die dortige Position der Welle von den Umlaufrädern und deren Lage und Toleranzen bestimmt.

Bei weiteren erfindungsgemäßen Ausgestaltungen weist die erste eintreibende Welle im Bereich der Wellenkupplung eine Außenverzahnung auf, die in eine Innenverzahnung der Welle der eintreibenden Vorrichtung eingreift, insbesondere wobei die Innenverzahnung ballig ausgeführt ist. Von Vorteil ist dabei, dass die Welle eine zweite Lagerstelle mittels der Wellenkupplung erfährt. Somit sind Toleranzen ausgleichbar und ausgleichsbedingte Belastungen der Welle werden reduziert.

Bei weiteren erfindungsgemäßen Ausgestaltungen treibt die zweite eintreibende Welle den Planetenträger an, an dem die mit dem Zentralrad und dem Kronenrad im Eingriff stehenden Umlaufräder gelagert sind. Von Vorteil ist dabei, dass mittels des Planetengetriebes die Leistungen der beiden Antriebe zusammenführbar sind. Dabei wird der Leistungsfluss des ersten Antriebs dem Zentralrad und der Leistungsfluss des zweiten Antriebs dem Planetenträger zugeführt, so dass dann abtriebseitig am Kronenrad der Leistungsfluss entnehmbar ist.

Bei weiteren alternativen erfindungsgemäßen Ausgestaltungen treibt die zweite eintreibende Welle das Kronenrad über eine Kupplung an, mit dem die auch mit dem Zentralrad in Eingriff stehenden Umlaufräder im Eingriff stehen. Von Vorteil ist dabei, dass der Abtrieb des Überlagerungsgetriebe am Planetenträger zur Verfügung steht und somit andere Übersetzungen erreichbar sind.

Bei weiteren erfindungsgemäßen Ausgestaltungen trägt die zweite eintreibende Welle eine Verzahnung, welche eine am Kronenrad vorgesehene Außenverzahnung antreibt, wobei die auch mit dem Zentralrad in Eingriff stehenden Umlaufräder mit der Innenverzahnung des Kronenrades im Eingriff stehen. Von Vorteil ist dabei, dass das Antrieben des Kronenrades über eine weitere Stirnradstufe bewirkt wird, wobei das angetriebene Rad das Kronenrad ist. Somit wird die sogar schon das eintriebseitige Antreiben des Kronenrades mit einer Übersetzung ausgeführt, wodurch ein **erster** Motor mit kleinerem Drehmoment verwendbar wird. Der Abtrieb des Überlagerungsgetriebes ist somit wiederum am Planetenträger bereit gestellt.

Bei weiteren erfindungsgemäßen Ausgestaltungen ist an einer der eintreibenden Wellen ein Stirnrad drehbar gelagert ist, das von einer Stirnradstufe umfasst ist, welcher Leistungsfluss vom Überlagerungsgetriebe zuführbar ist. Vorteiligerweise ist somit der Bauraum sehr gut ausnutzbar. Denn eine nachfolgende Stirnradstufe darf nun auch ein Zahnrad umfassen, welches an der eintreibenden Welle des vorgeschalteten Differentialgetriebes gelagert ist. Der Leistungsfluss oder Drehmomentfluss wird sozusagen in einer Schleife durch das Getriebe leitbar und es werden zusätzliche Teile vermieden. Insbesondere ist dies vorteilhaft bei einer abtriebsseitigen Aufteilung oder Gabelung der Leistungsflüsse.

Bei der Differentialgetriebeanordnung werden vorteiligerweise mindestens drei Getriebestufen verwendet. Wesentlich ist dabei, dass eine Planetengetriebestufe umfasst ist, die aus einem, maximal zwei Getriebeplanetenstufen besteht, die an die Eingangswelle des **ersten** Motors und die Antriebswelle angeschlossen sind. Eine Getriebeplanetenstufe bildet das Planetengetriebe mit den einfachen Umlaufrädern und zwei Getriebeplanetenstufen bilden des Planetengetriebe mit den doppelten Umlaufräder, und zwar in der Ausführung epi - hypo oder epi - epi.

Jede folgende Getriebeplanetenstufe in einem oder zwei Getriebezweigen wird durch das Stirngetriebe der Zahnräder gebildet, die auf den Zahnradvorgelegen befestigt sind.

Die Grundelemente des Planetenräderwerks mit den einfachen Umlaufräder sind das Zentralrad, die Umlaufräderschelle und das Kronenrad mit der Innenverzahnung. Mit dem Zentralrad und dem Kronenrad stehen **drei Umlaufräder im Eingriff** mit gleichem Durchmesser aus den Stirnzahnrädern.

Die Grundelemente des Planetenräderwerks mit den doppelten Umlaufräder sind das Zentralrad, die Umlaufräderschelle und das zweite Zentralrad. Drei Umlaufräder, wieder drei an der Zahl, bestehen aus den Stirnzahnrädern mit größerem und kleinerem Durchmesser, mit der Ausführung epi - hypo mit dem zweiten Zentralrad in der Form des Kronenrads mit der Innenverzahnung, und bei der Ausführung epi - epi mit dem zweiten Zentralrad mit der Außenverzahnung.

Vor einem der Antriebselemente des Planetenräderwerks oder vor einem der Antriebselemente des Zusatzantriebs kann man die Vorstufe aus den Stirnzahnrädern eingliedern.

Sämtliche angeführte Stirnzahnräder sind mit der einfachen Winkelverzahnung ausgeführt.

Bei gleichzeitigem Antrieb durch den **ersten** Antriebsmotor M₂ und den Antriebsmotor M₃ des Zusatzantriebes mit stufenlos verstellbaren Umdrehungen und Eingangsleistung wird an der angetriebenen Ausgangswelle stufenlose Veränderung der Umdrehungen und der Leistung und der stufenlos veränderbaren Übersetzung in großem Umgang erreicht.

Der Ausgleichsmechanismus setzt sich einerseits zusammen aus der freien Lagerung des Zentralrads, ohne Lager, mit der Antriebswelle zwischen den Umlaufräder, die axial auf der Stirnfläche der Eingangswelle gestützt ist, und andererseits aus der Wellenlagerung der Umlaufräderschelle, der Kronenradwelle, des Treibrads der Zusatzantriebswelle und aus den Wellen der Zahnradvorgelegen in den doppelreihigen Schrägrollenlagern mit axialem Betriebsspiel.

Mit der Erfindung ist als ein Differentialgetriebe verwendbar, dessen Übersetzung veränderbar ist und trotzdem eine Durchleitung hoher Leistungen ermöglicht ist. Das erfindungsgemäße Differentialgetriebe ist konstruktionsmäßig mit dem Planetengetriebe, umfassend Stirnzahnräder, und mit Ankoppelung an weitere Getriebestufen konzipiert. Somit erreicht die erfindungsgemäße Konstruktionslösung hohe veränderbare Werte an Übersetzung.

Es ist also für die Übertragung hoher Leistungen ein Differentialgetriebe in industriellen Antrieben einsetzbar, wobei hohe Werte an Übersetzung ausführbar sind und diese als frontale Getriebestufen einsetzbar sind, also als eingangsseitige Getriebestufen. Besonders vorteilhaft ist bei der Erfindung der beschriebene Ausgleichsmechanismus und die Gabelung in die Getriebezweige.

Die Erfindung wird nun anhand der Abbildungen näher erläutert:
Dabei werden
- Stufenplaneten auch als doppelte Umlaufräder,
- Planetenräder als **Umlaufräder oder Planeten,**
- ein Kronenrad, also innenverzahntes Zahnrad, auch als Kronenrad und
- ein Planetenträger auch als Umlaufräderschelle
   bezeichnet
   **und die Beispiele werden in einer Grundrissansicht mit geöffneten Deckel eines Getriebes dargestellt.**

**In der** **Fig. 1****,** **4 bis 9** **sind erfindungsgemäße Antriebsschemen** angeführt.

Die Wellen der Zahnräder mit der einfachen Winkelverzahnung und die Gleitlager sind dabei nur schematisch dargestellt.

Die Fig. 1 bis 4, 10, 11, 12 stellen die Differentialgetriebeeinrichtung mit dem Planetenräderwerk mit den einfachen Umlaufräder, Fig. 2 in einer ersten Lösung, Fig. 3 in einer anderen Ausführung, dar.

Die Fig. 5, 6 und 7 stellen die Differentialgetriebeeinrichtung mit dem Planetenräderwerk mit den doppelten Umlaufräder in der Ausführung epi - hypo und die Fig. 8 und 9 mit den doppelten Umlaufräder in der Ausführung epi - epi dar.

Die Fig. 10, 11 und 12 zeigen die Differentialgetriebeeinrichtung mit der Gabelung in zwei Getriebezweige 38, 39 gemäß der ersten Ausführung.

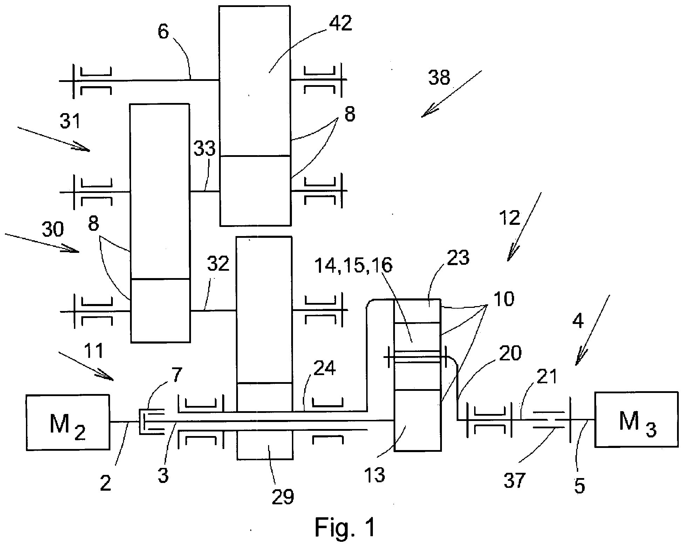

In der Fig. 1 ist kinematisch die Leistungs-Differentialgetriebeeinrichtung mit dem Ausgleichsmechanismus 11 mit seinem Hauptteil - dem Planetenräderwerk 12, das mit einer Planetenstufe 10 konzipiert ist, und zwar das Planetenräderwerk 12 mit den einfachen Umlaufräder 14, 15, 16, dargestellt. Die ganze Baugruppe ist als vierstufige Kombination ausgeführt.

An die Eingangswelle 2 des **ersten** Motors M₂ ist das Planetenräderwerk 12 mittels der Antriebswelle 3 angeschlossen, wobei die Verbindung wird weiter unten beschrieben bei der Beschreibung des Ausgleichsmechanismus.

Dieses Planetenräderwerk ist mit den einfachen Umlaufräder 14, 15, 16 zusammengesetzt, die mit dem Zentralrad 13 mit der Außenverzahnung und dem Kronenrad 23 mit der Innenverzahnung in ständigem Eingriff sind. Auf der Welle 24 des Kronenrads 23 ist das Antriebsrad 29 befestigt. Folgende Getriebestufen 8, durchgeführt in einem Getriebezweig 38, sind durch die Stirngetriebe der Zahnräder gebildet, die auf den Zahnradvorgelegen 30, 31 und der Ausgangswelle 6 befestigt sind.

Das Planetenräderwerk 12 ist durch die Grundteile, das gleichzeitig rotierende Zentralrad 13, die Umlaufräderschelle 20, also Planetenträger, und das Kronenrad 23 , also Kronenrad, gebildet. Der Antriebsteil des Planetenräderwerks 12 ist das Zentralrad 13 mit dem **ersten M**otor M₂.

Diese Ausführung zeigt den prinzipiellen Grundgedanken der Erfindung und sie ist bei allen in den Abbildungen weiter angeführten Konzeptionen angewendet.

Der zweite Antriebsteil ist die Umlaufräderschelle 20 mit der Ausgangswelle 21 der Umlaufräderschelle 20, die den Zusatzantrieb 4 mit dem **zweiten** Motor M₃, angeschlossen mittels der Kupplung 37, bildet.

Der angetriebene Teil des Planetenräderwerks 12 ist das Kronenrad 23 mit der Welle 24 des Kronenrads 23, auf dem das Antriebsrad 29 befestigt ist. Über die Stirngetriebestufen 8 der Zahnradvorgelege 30, 31, in einem Getriebezweig 38, wird der Leistungsfluss an die angetriebene Ausgangswelle 6 mit dem letzten angetriebenen Rad 42 übertragen.

Alle Stirnantriebsräder der Planetenstufe 10 und Getriebestufen 8 sind mit einer Schrägverzahnung bei ihrem ständigen Eingriff ausgestattet.

Bei den beiden **M**otoren M₂, M₃ sind die Umdrehungen und die Eingangsleistung stufenlos veränderbar, und dadurch werden an der angetriebene Ausgangswelle 6 die stufenlos veränderbaren Sollumdrehungen und Leistung bei gleichzeitiger stufenlos veränderbaren Größe der Übersetzung erreicht.

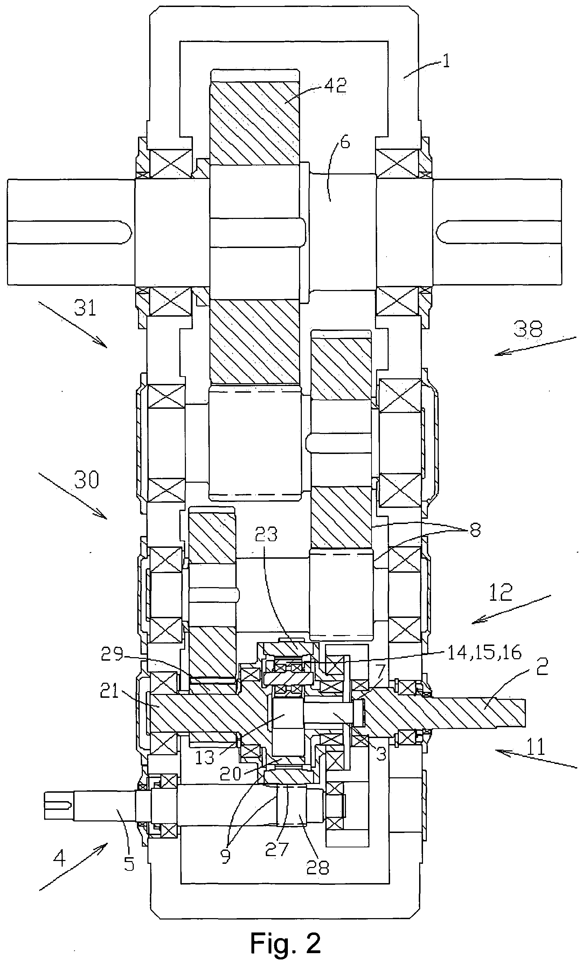

Einen bedeutsamen Beitrag für die Differentialgetriebeeinrichtung stellt der Ausgleichsmechanismus 11 dar, der aus folgenden Bauteilen gebildet ist. Die Eingangswelle 2 ist mit der Antriebswelle 3 mittels der Wellenkupplung 7 verbunden, in der Fig. 1 nur schematisch, in der weiteren Fig. 2 ist sie konstruktionsmäßig dargestellt. Sie ermöglicht dem Zentralrad 13, das auf der Antriebswelle 3 befestigt ist, eine freie Lagerung des Zentralrads 13, ohne Lager, was mittels der Lagerung zwischen drei einfachen Umlaufräder 14, 15, 16 erreicht wird. Dadurch wird die gleichmäßige Verteilung der Belastung auf die einzelne Umlaufräder 14, 15, 16 erreicht.

Als Wellenkupplung 7 ist beispielsweise eine Zahnkupplung und/oder eine Klauenkupplung verwendbar. Dabei sind die Zähne oder Klauen entsprechend ballig ausführbar, um möglichst gut Kräfte abzuleiten oder auszugleichen.

Weiterer Teil des Ausgleichsmechanismus 11 ist die Lagerung der Welle 21 der Umlaufräderschelle 20, der Welle 24 des Kronenrads 23 und der Wellen 32, 33 der Zahnradvorgelegen 30, 31 und der Ausgangswelle 6, und zwar in der Wälzlagerung mit axialen Bewegungsfreiheit. Dies kann mittels z. B. der zweireihigen Schrägrollenlager mit axialem Spiel, die in der Fig. 1 nicht dargestellt sind, durchgeführt werden.

Aufgrund der erhöhten Beweglichkeit der freien Lagerung des Zentralrads 13 und der ganzen Baugruppe wird weiter die Möglichkeit der zuverlässigen, eindeutigen Bestimmung der Kräfte in den einzelnen Eingriffen der Zahnräder erreicht, was aufgrund der Berechnungsmethode gemäß der Theorie der Bindungsabhängigkeit für die Raumkombinationen nachgewiesen werden kann.

Die Konzeption der Differentialgetriebeeinrichtung in der Fig. 1 basiert auf der koaxialen Ausführung der angetriebenen Eingangswelle 2 des **ersten** Motors M₂, und der Eingangswelle 5 des Zusatzantriebs 4 mit dem **zweiten** Motor M₃.

Bei dem **ersten M**otor M₂ und dem **zweiten** Antriebsmotor M₃ des Zusatzantriebs 4 sind die Umdrehungen und die Eingangsleistung stufenlos veränderbar und dadurch werden stufenlose Änderung der Umdrehungen und der Leistung, die mittels angetriebener Ausgangswelle 6 bei stufenlos veränderbarer Übersetzung abgeführt wird, erreicht. Die Ausgangswelle 6 kann zur Anschließung einer angetriebenen Maschine an einer oder anderer Ausgangsseite oder zwei gleichzeitig angetriebenen Maschinen, und zwar auf beiden Seiten des Getriebegehäuses 1, benutzt werden.

Aufgrund der Wahl der Anzahl von Zahnradvorgelegen 30, 31 mit befestigten Getriebestufen 8 der Stirnzahnräder mit einfacher Winkelverzahnung, also Schrägverzahnung, und ihrer Anordnung in der Grundrissfläche wird höhere Übersetzung und die erforderliche Entfernung von der Eingangswelle 2 mit **erstem** Motor M₂, eventuell von der Koaxialwelle 5 des Zusatzantriebs 4 mit dem **zweiten** Motor M₃ von der Ausgangswelle 6 mit der angetriebenen Maschine erreicht, mit Beibehaltung der Möglichkeit der Formgestaltung des Getriebegehäuses 1 in eine größere Breite.

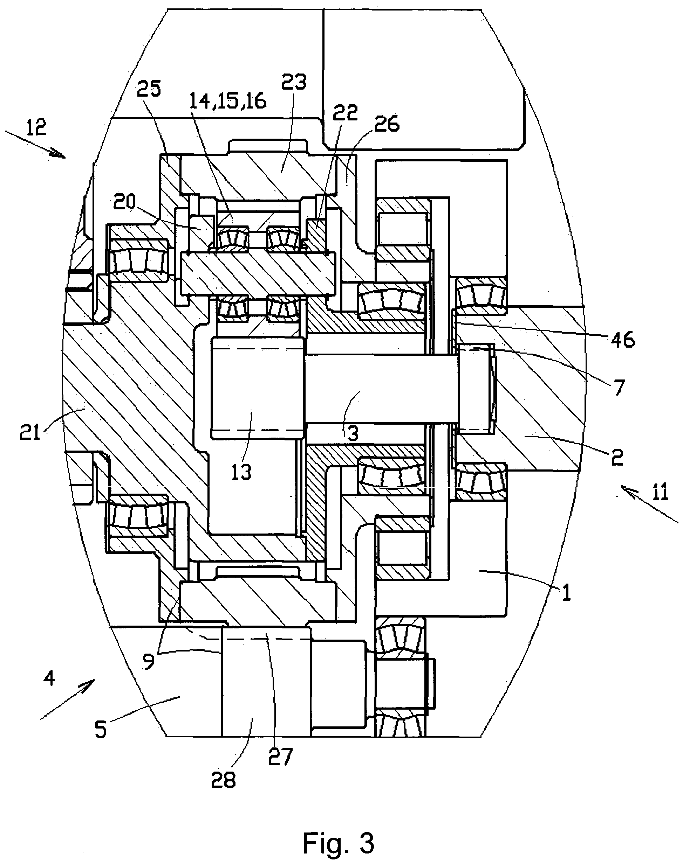

Die Fig. 2 zeigt den Entwurf der Differentialgetriebeeinrichtung mit dem Ausgleichsmechanismus 11 und mit dem Planetenräderwerk 12 mit einfachen Umlaufräder 14, 15, 16 in einem Getriebezweig 38 und ist durch die Fig. 3 mit dem Ausschnitt des detaillierten Konstruktionsentwurfs des Planetenräderwerks ergänzt.

In der Beschreibung der Fig. 2, bzw. Fig. 3 sind im Weiteren nur die Abweichungen der Ausführung gegenüber der Konzeption in Fig. 1 erwähnt.

Das Planetenräderwerk 12 in Fig. 2 und Fig. 3 ist mit dem rotierenden Antriebszentralrad 13, mit dem Zusatzantrieb 4 von dem Kronenrad 23 und angetriebenen Umlaufräderschelle 20 konzipiert.

Weiter ist die Konstruktionsbaugruppe des Antriebs von der Seite der Eingangswelle 2 des **ersten** Motors M₂ gezeigt, der mittels Wellenkopplung 7 an die Antriebswelle 3 mit dem Zentralzahnrad 13 aus einem Stück angeschlossen ist.

Die Fig. 2 zeigt die Projektlösung, die Fig. 3 die Konstruktionslösung des Zusatzantriebs 4 beim Kronenrad 23 mit Hilfe der Eingangswelle 5 des Zusatzantriebs 4 mit Treibrad 28 im Eingriff mit der Außenverzahnung 27 auf dem äußerem Umfang des Kronenrads 23.

Das Treibrad 28 zusammen mit der eingreifenden Außenverzahnung 27 des Kronenrads 23 bilden die Vorstufe 9, die in Fig. 2 nicht nur die Erhöhung der Übersetzung ermöglicht, sondern auch die Vergrößerung der Entfernung der Eingangswelle 5 des Zusatzantriebs 4 von der Ausgangswelle 6 mit zwei Wellenenden. Das Antriebsrad 29 ist jetzt auf der Antriebswelle 21 der Umlaufräderschelle 20 befestigt.

Die Konzeption des Ausgleichsmechanismus 11 der Differentialgetriebeeinrichtung ist in der Fig. 3 als Konstruktionsausführung der freien Lagerung des Zentralrads 13 mit Antriebswelle 3, ohne Lager, zwischen drei Umlaufräder 14, 15, 16 gezeichnet. Die Antriebswelle 3 ist axial an die bombierte Stirnfläche der Eingangswelle 2 gestützt und zugleich axial durch den an die Eingangswelle 2 frontal angeschraubten Stützring 46 gesichert, siehe Fig. 3. Die Bestandteile des Ausgleichsmechanismus 11 bilden weiter sämtliche Wälzlagerungen der Wellen mit zweireihigen Schrägrollenlagern.

Aus der Teilkonstruktionsgestaltung in der Fig. 3 ist die Wellenkopplung 7 der Eingangswelle 2 mit der Antriebswelle 3, die als Kupplungsverzahnung konstruiert ist, gut ersichtlich. In der Fig. 3 ist die Ausgestaltung der Umlaufräderschelle 20 gemeinsam mit der Welle 21 der Umlaufräderschelle 20 aus einem Stück und weiter der geteilten Umlaufräderschelle 20 mit dem angeschraubten und mittels **Stiften** gesicherten Flansch 22 sichtbar.

Das Kronenrad 23 ist konstruiert als geteiltes Rad, seine Stirnflächen 25, 26 sind darauf seitlich angeschraubt und mittels der Stifte gesichert. Der Stirn 25 ist rotierend auf der Welle der Umlaufräderschelle 21 gelagert und zweiter Stirn 26 ist auf dem Flansch 22 der Umlaufräderschelle 20 gelagert. Die Lagerung ist mittels zweireihiger Schrägrollenlager durchgeführt.

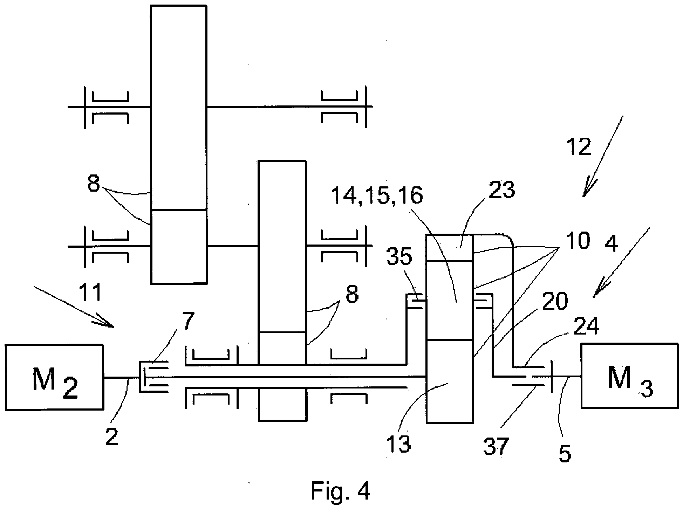

Die Fig. 4 ist das kinematische Schema der Differentialgetriebeeinrichtung mit dem Ausgleichsmechanismus 11 mit dem Planetenräderwerk 12 mit den einfachen Umlaufräder 14, 15, 16, wo die Antriebsteile das Zentralrad 13 und das Kronenrad 23 sind und der angetriebene Teil die Umlaufräderschelle 20 ist, mit den weiter angeführten Änderungen im Gegenteil zur Fig. 1 bzw. Fig. 2.

In der Fig. 4 ist das Spiegelbild der Anordnung von Motoren M₂, M₃ im Gegenteil zu Fig. 2. Die Fig. 4 präsentiert die Lösung für die verlangte niedrigere Übersetzung. Deshalb ist die Differentialgetriebeeinrichtung mit einer Planetenstufe 10 und nur zwei Planetenstufen 8 aus den Stirnzahnrädern ausgebildet.

Eine markante Änderung stellt die Ausführung des Zusatzantriebs 4 dar, der als direkter Antrieb des Kronenrads 23 mittels Welle 5 des Zusatzantriebs 4 konzipiert ist, der an die Rohrverlängerung der Welle 24 des Kronenrads 23 mittels Kupplung 37 angeschlossen ist. Die Ausführung der einfachen Umlaufräder 14, 15, 16 auf der Umlaufräderschelle 20 ist geändert worden, wie die Fig. 4 zeigt, in die Wellenlagerung 35 der einfachen Umlaufräder 14, 15, 16 auf der Umlaufräderschelle 20 mit der Rotationsbeweglichkeit.

Die Lösung des kinematischen Schemas in der Fig. 4 führt zur koaxialen Anordnung der Eingangswelle 2 des **ersten** Motors M₂ und der Welle 5 des Zusatzantriebs 4. Bei der Ausgestaltung des Getriebegehäuses 1 wird die Breite nicht mehr so deutlich über seine Länge vorwiegen.

Im Falle der Anforderung einer höheren Übersetzung ist es möglich, im Gegenteil zur Ausführung in Fig. 4, eine Vorstufe 9 bzw. eine oder mehrere Getriebestufen 8 anzuschließen.

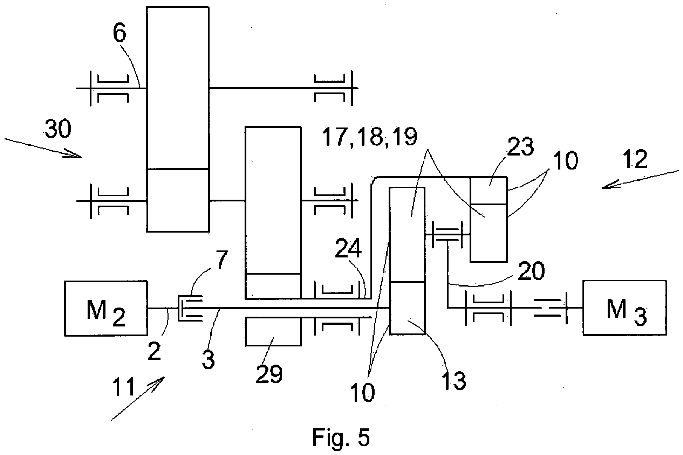

Fig. 5 stellt das kinematische Schema der Differentialgetriebeeinrichtung mit dem Ausgleichsmechanismus 11 und dem Planetenräderwerk 12 dar.

In der Beschreibung der Fig. 5 sind die Abweichungen der Ausführung im Gegenteil zur Konzeption in Fig. 1 angeführt.

Das Planetenräderwerk ist durchgeführt mittels zwei Planetenstufen 10 in der Ausführung als Planetenräderwerk 12 genannt mit doppelten Umlaufräder 17, 18, 19 und in der Kombination epi - hypo. Diese doppelten Umlaufräder 17, 18, 19 sind durch die Stirnzahnräder mit größerem und kleinerem Durchmesser gebildet, von denen das erste größere Rad im Eingriff mit dem Zentralrad 13 mit der Außenverzahnung ist und das zweite kleinere Rad im Eingriff mit dem zweiten Zentralrad in der Form eines Kronenrads 23 mit Innenverzahnung ist.

Die Antriebsteile des Planetenräderwerks 12 mit doppelten Umlaufräder 17, 18, 19 sind das Zentralrad 13 und die Umlaufräderschelle 20, den angetriebenen Teil bildet das Kronenrad 23. Bei der rotierenden Umlaufräderschelle 20 sind dann durch den ersten Eingriff der Zahnräder mit der Außenverzahnung der doppelten Umlaufräder 17, 18, 19 die kinematischgeometrisch **epizykloidische** Bedingungen gegeben. Durch den zweiten Eingriff der Zahnräder mit der Außen- und Innenverzahnung sind **hypozykloidische** Bedingungen erfüllt. Deshalb wird **hierzu** die abgekürzte Bezeichnung epi - hypo benutzt.

Der Ausgleichsmechanismus ist wieder durch die freie Lagerung des Zentralrads 13 zwischen drei doppelten Umlaufräder 17, 18, 19 und weiter bei allen Rotationslagerungen durch die verwendeten zweireihigen Schrägrollenlager, die nur mit ihrem axialen Betriebsspiel dargestellt sind, gebildet.

In der Fig. 5 ist gezeigt, wie die längere Kopplung der Eingangswelle 2 mit der Antriebswelle 3 mit dem Zentralrad 13, die ohne Leitung durch das Antriebsrad 29 geht, für die Konstruktionsausarbeitung der freien Lagerung des Zentralrads 13 zwischen Umlaufräder 17, 18, 19, ausgenutzt ist. Diese Platzierung des Antriebsrads 29 führt zu der abnormalen Konstruktionsformung der Anbindung des Kronenrads 23 an die Welle 24 des Kronenrads. Aufgrund der Platzierung von nur einer Zahnradvorgelege 30 und der angetriebenen Welle 6 in der Fig. 5 ist es möglich, das Getriebegehäuse 1 eher in die längliche Achsenverlängerung zu formen.

Mittels der Anschließung z. B. weiterer zwei Getriebestufen 8 auf den Zahnradvorgelegen 30, 31 erhalten wir sechsstufige Differentialgetriebeeinrichtung mit dem Getriebegehäuse 1, das flächenmäßig in die Breite geformt ist.

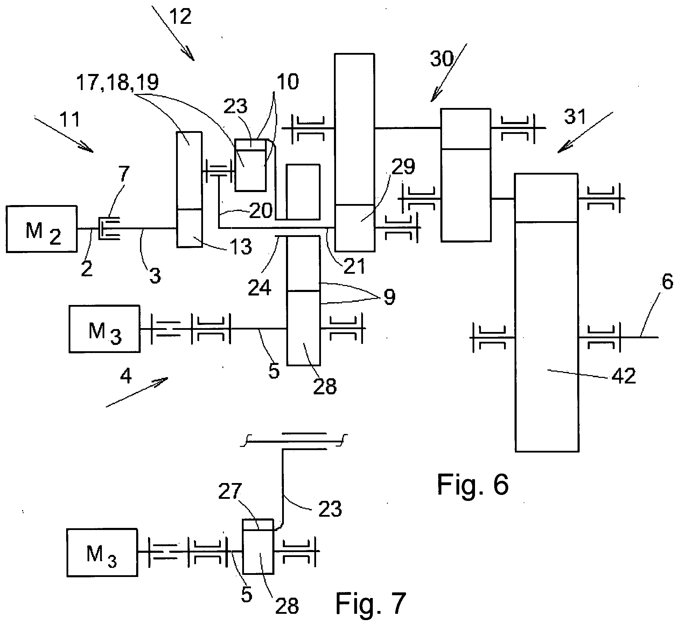

In der Fig. 6 ist die Lösung des Differentialgetriebeeinrichtung mit dem AusgleichsMechanismus 11 in der sechsstufigen Ausführung gezeigt, in der Fig. 7 ist sie durch die alternative Ausführung des Zusatzantriebs 4 ergänzt. Das Planetenräderwerk 12 mit den doppelten Umlaufräder 17, 18, 19 hat die Ausführung epi - hypo. Näheres siehe die Beschreibung zur Fig. 4.

Weiter sind bestimmte Abweichungen von der Fig. 1 und 5 angeführt. Die Antriebsteile des Planetenräderwerks 12 sind das Zentralrad 13 mit der Antriebswelle 3 und das Kronenrad 23 der zweiten Planetenstufe 10, das einen Teil des Zusatzantriebs 4 bildet. Der Zusatzantrieb 4 kann so konzipiert sein, wie es in der Fig. 6 gezeigt ist, mit Hilfe der Antriebswelle 5 mit dem **zweiten** Motor M₃ mit dem Treibrad 28, das mit dem angeschlossenen Zahnrad auf der Welle 24 des Kronenrads 23 im Eingriff ist. Das Treibrad 28 bildet zusammen mit dem angeschlossenen Zahnrad auf der Welle 24 des Kronenrads 23 die Vorstufe 9.

In der alternativen detaillierten Fig. 7 ist die analogische Ausführung zu Fig. 2, 3 mit der Eingangswelle 5 des Zusatzantriebs 4 mit dem Treibrad 28 dargestellt, das mit der Außenverzahnung 27 hergestellten auf dem Außenumfang des Kronenrads 23, im Eingriff ist. Das Treibrad 28 bildet gemeinsam mit der Außenverzahnung 27 des Kronenrads 23 die Vorstufe 9. Mit Rücksicht auf die Platzierung des **ersten M**otors M₂ und des **zweiten** Motors M₃ des Zusatzantriebs 4 auf der gleichen Seite des Getriebegehäuses 1 kann die Vorstufe 9 für die Vergrößerung ihrer gegenseitigen Entfernung genutzt werden.

Der angetriebene Teil des Planetenräderwerks 12 ist die Umlaufräderschelle 20 in Verbindung mit der Welle 21 der Umlaufräderschelle 20, auf der das Antriebsrad 29 befestigt ist. Die angeschlossenen Zahnradvorgelege 30, 31 sind hier verwendet, um die benötigte hohe Übersetzung zu erreichen. In der Fig. 6 sind insgesamt sechs Getriebestufen gezeigt. Ihre Anordnung in der Fläche in der Fig. 6 wurde genutzt für das Erreichen der länglichen Achsenverlängerung der Form des Getriebegehäuses 1 der Differentialgetriebeeinrichtung. In dieser Ausführung wurde der wichtige Ausgleichsmechanismus 11 wieder benutzt, wie oben zur
Fig. 1, 2, 3 näher beschrieben.

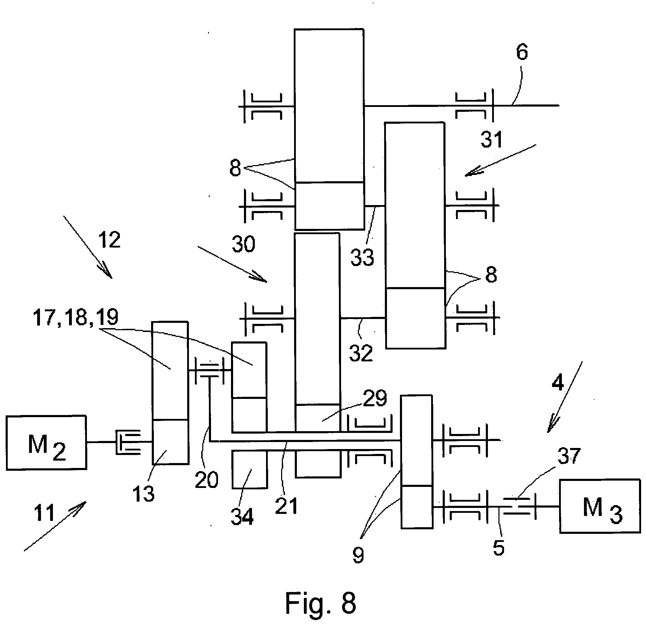

Die Fig. 8 zeigt in ihrer kinematischen Darstellung der Differentialgetriebeeinrichtung mit dem Ausgleichsmechanismus 11 die Konzeption mit dem Planetenräderwerk 12 mit den doppelten Umlaufräder 17, 18, 19, und zwar in der Ausführung epi - epi.

In der weiteren Beschreibung sind die Referenzen und Abweichungen im Bezug auf die Fig. 6 angeführt.

Drei doppelte Umlaufräder 17, 18, 19 sind in Eingriff mit dem Zentralrad 13 und mit dem zweiten Zentralrad 34, wobei die beiden eine Außenverzahnung haben, also die Ausführung epi - epi, näheres siehe Fig. 8. Der Antriebsteil des Planetenräderwerks 12 ist das Zentralrad 13 und die Umlaufräderschelle 20, der angetriebene Teil ist das zweite Zentralrad 34. Auf der Welle 5 des Zusatzantriebs 4 und auf der Welle 21 der Umlaufräderschelle 20 ist die Vorstufe 9 platziert, die aus der Getriebestufe 8 besteht, die die Übertragung erhöht und zugleich die Achsenentfernung zwischen der Welle 5 des Zusatzantriebs 4 mit dem **zweiten** Motor M₃ und der Ausgangswelle 6 vergrößert.

Die Differentialgetriebeeinrichtung ist mit den Stirnzahnrädern mit nur Außenverzahnung, also ohne Innenverzahnung, die in der Herstellung anspruchsvoller ist, bestückt.

Der Ausgleichsmechanismus 11 ist im Einklang mit der Beschreibung in der Fig. 1 und der Fig. 2, 3 gebildet.

An das zweite Zentralrad 34 des Planetenräderwerks 12 ist das Antriebsrad 29 befestigt und als Gesamteinheit ist sie rotierend mittels Lager auf der Welle 21 der Umlaufräderschelle 20 gelagert. Die Flächenplatzierung der Wellen 32, 33 der Zahnradvorgelegen 30, 31 mit den Getriebestufen 8 in der Fig. 8 führt zum Formgestaltung des Getriebegehäuses 1 in die Breite mit der Ausnutzugsmöglichkeit, die schon in der Beschreibung in der Fig. 1 angeführt wurde.

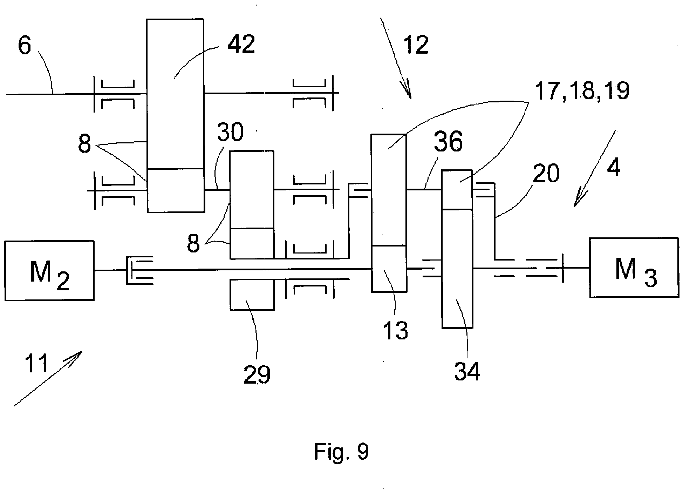

Die Fig. 9 stellt die Differentialgetriebeeinrichtung mit dem Ausgleichsmechanismus 11 dar, wo das Planetenräderwerk 12 mit den doppelten Umlaufräder 17, 18, 19 in der Ausführung epi - epi mit dem Antriebszentralrad 13 und dem Zusatzantrieb 4, der als direkter Antrieb vom **zweiten** Motor M₃ an das zweite Zentralrad 34 ausgeführt ist, konzipiert ist. Der angetriebene Teil des Planetenräderwerks 12 ist die Umlaufräderschelle 20. In der schematischen Darstellung ist die Lösungsvariante der Lagerung der Wellen 36 der doppelten Umlaufräder 17, 18, 19 auf der Umlaufräderschelle 20 gezeigt, wie schon bei der Fig. 4 beschrieben.

Diese vierstufige Ausführung ist nur mittels Zahnräder mit Außenverzahnung erreicht, und zwar mit ihrer minimalen Anzahl. Von dem Standpunkt der Getriebestufen 8
mit der Zahnradvorgelege 30 und Ausgangswelle 6 mit dem letzten angetriebenen Rad 42 kommt die Formgestaltung des Getriebegehäuses 1 in der Langform zur Geltung.

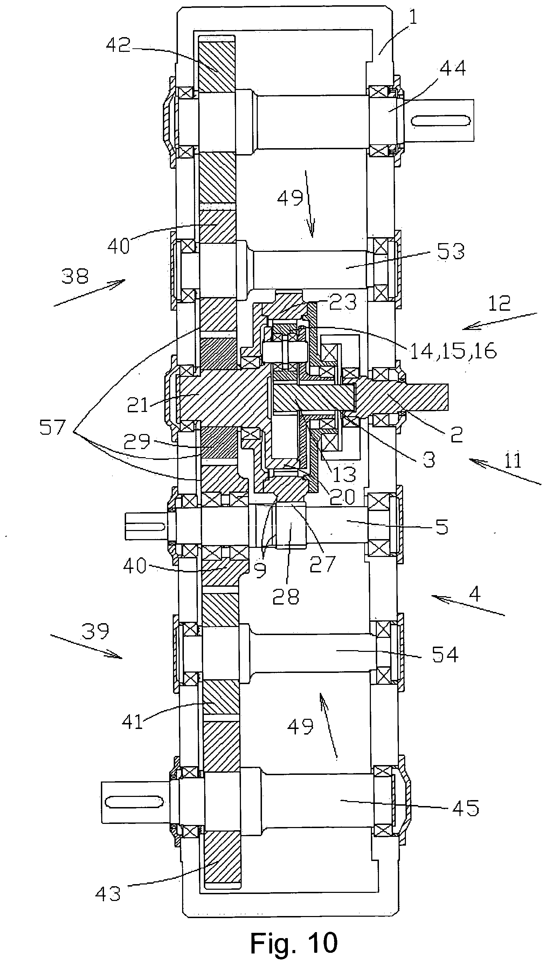

In der Fig. 10 ist die Differentialgetriebeeinrichtung mit dem Ausgleichsmechanismus 11 mit zwei Getriebezweigen 38, 39, die in der Projektausführung angeordnet sind, ausgebildet. Der Ausgleichsmechanismus 11 ist analog zu dem in den Fig. 2, 3, wo auch die Beschreibung angeführt ist.

Die Grundkomponente bleibt das Planetenräderwerk 12 mit den einfachen Umlaufräder 14, 15, 16 mit dem Antriebszentralrad 13 und dem Antriebskronenrad 23 mit der Welle 5 des Zusatzantriebs 4 mit dem Treibrad 28, das im Eingriff mit der Außenverzahnung 27 des Kronenrads 23 ist, und dadurch sie die Vorstufe 9 bildet, wie es schon in der Fig. 2 und Fig. 3 angewendet wurde. Der angetriebene Teil ist die Umlaufräderschelle 20, wobei auf die Welle 21 der Umlaufräderschelle 20 das Antriebsrad 29 befestigt ist. Dieses ist in gleichzeitigem permanentem Eingriff in der horizontalen Ebene mit zwei Zwischenzahnrädern 40, rotierend gelagert auf den Zahnradvorgelegen 49, die zusammen mit dem Antriebsrad 29 die Getriebegabelungsstufe 57 für zwei Getriebezweige 38, 39 bilden.

In der Fig. 10 steht in dem ersten Getriebezweig 38 das Zwischenzahnrad 40, fest gelagert auf der Welle 53 der Zahnradvorgelege 49, mit dem letzten angetriebenen Zahnrad 42 der Ausgangswelle 44 in Eingriff und in dem zweiten Getriebezweig 39 steht das weitere Zwischenzahnrad 40, vorteilhaft rotierend gelagert auf der Welle 5 des Zusatzantriebs 4, mit dem Zwischenzahnrad 41 in Eingriff, fest gelagert auf der Welle 54 der Zahnradvorgelege 49, das im Eingriff mit dem letzten angetriebenen Rad 43 steht, das auf der Ausgangswelle gelagert ist 45, abgebildet.

Es wurde eine wesentliche Vergrößerung der Entfernung zwischen **zwei** angetriebenen Ausgangswellen 44, 45 des Getriebegehäuses 1 erreicht. Aufgrund dieser Anordnung wurde die verlangte Übersetzung in einem und zweitem Getriebezweig mit identischen Werten erreicht.

Bei den stufenlos veränderbaren Umdrehungen und Eingangsleistung der **Motoren** M₂, M₃ wird die stufenlose Änderung der Umdrehungen und der Leistung an den Ausgangswellen 44, 45 der Getriebezweigen 38, 39 bei den stufenlos veränderbaren Übersetzungen erreicht.

Die Ausgangswellen 44, 45 können mit einem oder zwei Wellenenden konzipiert werden, was das Anschließen von zwei angetriebenen Maschinen an einem Ende einer Welle 44, 45 auf einer oder anderer Seite des Getriebegehäuses 1 ermöglicht.

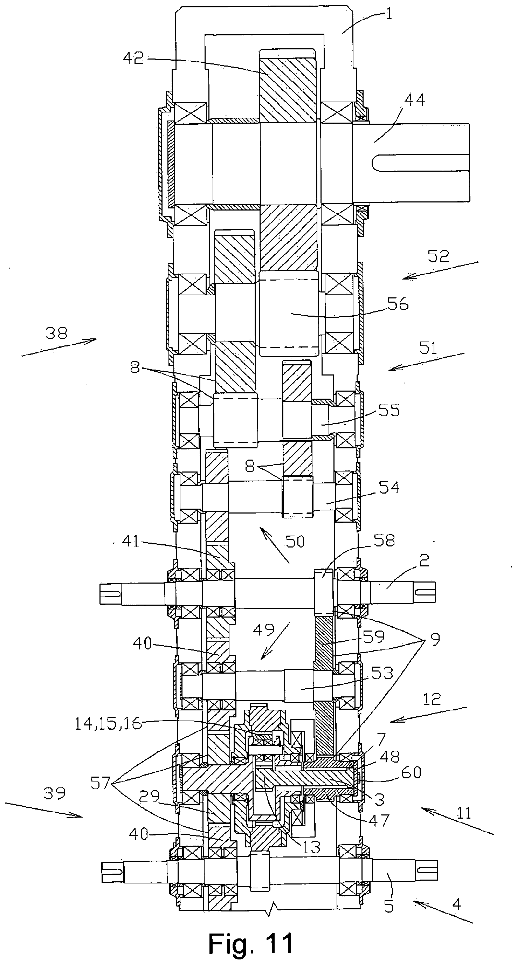

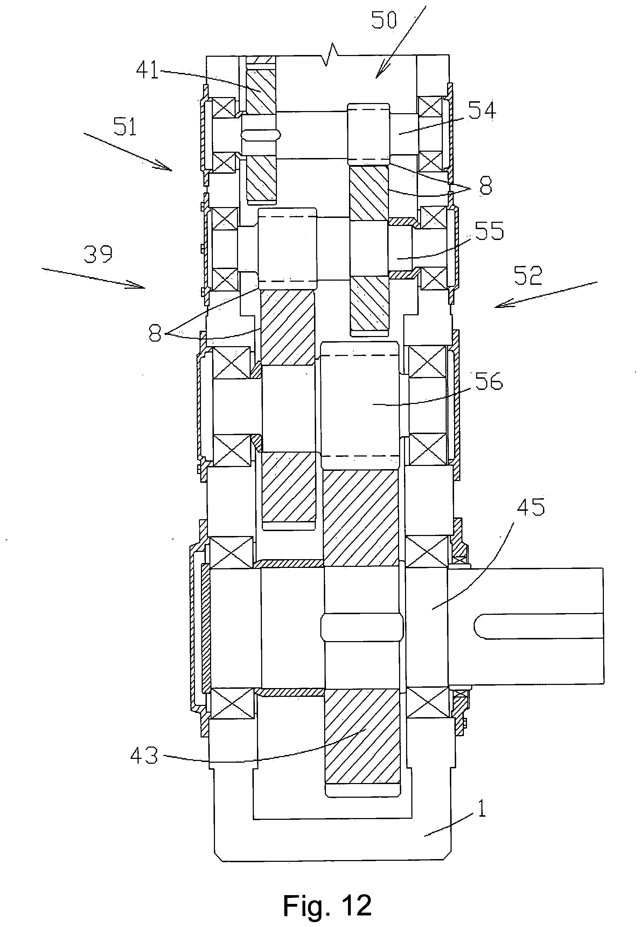

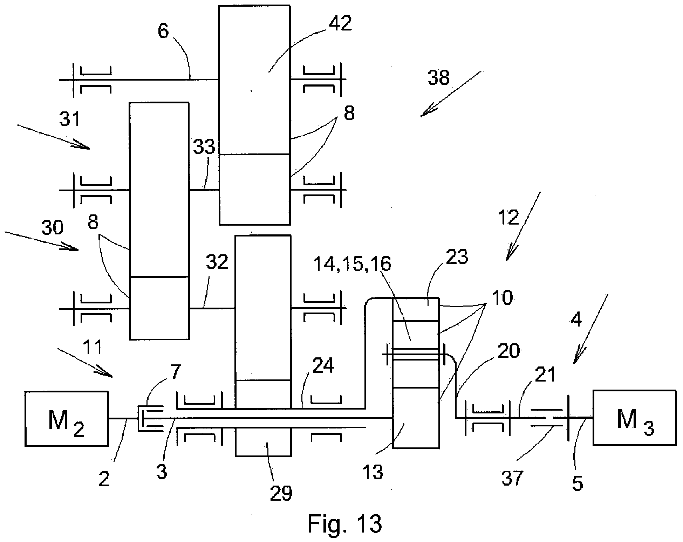

In Fig. 11 und 12 ist die Projektausführung der Differentialgetriebeeinrichtung mit dem Ausgleichsmechanismus 11 mit zwei Getriebezweigen 38, 39, mit bestimmten Modifikationen im Gegensatz zu der Fig. 10, angeführt.

Die Fig. 11 stellt einen Teil der Grundrissansicht der Differentialgetriebeeinrichtung mit dem Planetenräderwerk 12 mit dem Getriebezweig 38 dar und die Fig. 12 stellt den restlichen Teil mit dem zweiten Getriebezweig 39 dar.

Vorteil bei Ausführung nach Fig. 11 besteht darin, dass eine deutliche Vergrößerung der Entfernung zwischen den beiden Ausgangswellen 44, 45 erreicht wird.

Bei dem Antrieb des Zentralrads ist die Vorstufe 9 genutzt, die aus dem Eingangsrad 58, das auf der durchlaufend gelagerten Eingangswelle 2 des **ersten** Motors M₂ befestigt ist, des Einbaurads 59, das auf der Zahnradvorgelege 49 des Getriebezweigs 38 fest gelagert ist, und aus dem Zwischenrad 47, das mit der inneren Kupplungsverzahnung ausgestattet ist, zusammengesetzt ist.

Der Ausgleichsmechanismus 11 besteht aus der freien Lagerung des Zentralrads 13, ohne Lager, zwischen drei Umlaufräder 14, 15, 16, das auf der Antriebswelle 3 befestigt ist, die mittels Wellenkopplung 7, ausgeführt durch die Kupplungsverzahnung mit dem Zwischenrad 47, gekoppelt ist. Die Antriebswelle 3 ist axial an die frontal angeschraubte Lasche 48 an das Zwischenrad 47 gestützt und axial mittels Achsensicherungsschraube 60 der Lasche 48 gesichert.

Weitere Ausführung des Planetenräderwerks 12 mit der Welle 5 des Zusatzantriebs 4 ist analog zur Ausführung nach Fig. 10.

Die Getriebegabelungsstufe 57 ist durch das Antriebsrad 29 gebildet, mit gleichzeitigen Eingriffen beider Zwischenzahnräder 40, rotierend gelagert, mit einem Zwischenzahnrad 40 auf der Zahnradvorgelege 49 des ersten Getriebezweigs 38 und zweitem Zwischenzahnrad 40 auf der Welle 5 des Zusatzantriebs 4 in dem zweiten Getriebezweig 39. Zweckmäßig ist auch die Rotationslagerung des Zwischenzahnrads 41 auf der Eingangswelle 2 in dem Getriebezweig 38 gelöst. Weiter sind die Zahnradvorgelegen 50, 51, 52 mit den Getriebestufen 8 in beiden Getriebezweigen 38 und 39 angeschlossen.

Die letzten angetriebenen Räder 42, 43 sind wieder auf den Ausgangswellen 44, 45 in den Getriebezweigen 38, 39 fest angesetzt. Einen Teil des Ausgleichsmechanismus 11 bildet auch die Eingangswelle 2, Wellen 53, 54, 55, 56 der Zahnradvorgelegen 49, 50, 51, 52 und die Ausgangswellen 44, 45.

Mit dieser Anordnung ist eine hohe stufenlos veränderbare Übersetzung mit identischen Werten in den Getriebezweigen 38, 39 bei den stufenlosen Änderungen der Umdrehungen und der Leistung an dem Eingang und dem Ausgang der Differentialgetriebeeinrichtung erreicht.

Die Aufstellung in der Fig. 11, 12 beweist das Erreichen einer deutlichen Entfernung der Ausgangswellen 44, 45 der Getriebezweigen 38, 39.

Die Ausgangswelle 2 des **ersten** Motors M₂ und die Welle 5 des Zusatzantriebs 4 des **zweiten** Motors M₃ und die Ausgangswellen 44, 45 können mit beiderseitigen Wellenenden ausgearbeitet werden. Dies kann für das erforderliche Anschließen **der Motoren** M₂, M₃ und die Platzierung der gleichzeitig angeschlossenen angetriebenen Maschinen auf einer oder anderer Seite des Getriebegehäuses 1, und zwar in verschiedenen Varianten ihrer Stellung, vorteilhaft ausgenutzt werden.

Die Differentialgetriebeeinrichtung mit dem Ausgleichsmechanismus mit dem eingebauten Planetenräderwerk mit ihrer Ausnutzung im Bereich der industriellen Getriebeeinrichtungen mit den Zahnrädern ist dadurch spezifisch, dass sie eine große Leistungsbelastung bei der stufenlos veränderbaren Ein- und Ausgangsparametern der Umdrehungen und der Leistung ermöglicht.

Diese Differentialgetriebeeinrichtungen können in den Antrieben der Maschinenaggregate des schweren Maschinenbaus, der Hüttenindustrie und bei Abstichkonvertern, für Hebevorrichtungen bei großen Kränen und/oder Aufzügen und dergleichen, benutzt werden. Insbesondere ist auch eine Erhöhung der Sicherheit erreichbar.

Die Differentialgetriebeeinrichtung mit dem Ausgleichsmechanismus besteht mindestens aus drei Getriebestufen (8), von denen eine oder zwei Planetenstufen (10) sind. Der Antriebsteil des Planetenräderwerks (12) ist das Zentralrad (13). Bei dem Planetenräderwerk (12) mit den einfachen Umlaufräder (14, 15, 16) bildet den zweiten Teil des Zusatzantriebs (4) die Umlaufräderschelle (20) oder das Kronenrad (23), bei dem Planetenräderwerk mit den doppelten Umlaufräder (17, 18, 19) ist es die Umlaufräderschelle (20) oder das Kronenrad (23), eventuell die Umlaufräderschelle (20) oder das zweite Zentralrad (34).

Jede nachfolgende Getriebestufe (8), in einer oder zwei Getriebezweigen (38, 39), ist durch den Eingriff der Stirnzahnräder mit dem Antriebsrad (29), befestigt auf der Welle (24) des Kronenrads (23) oder der Umlaufräderschelle (20), ausgebildet.

Vor einem der Antriebsteile des Planetenräderwerks (12) kann die frontale Vorstufe (9) angeschlossen werden.

Der Ausgleichsmechanismus (11) ist vor allem aus der freien Lagerung des Zentralrads (13), ohne Lager, zwischen drei Umlaufräder (14, 15, 16) oder (17, 18, 19), befestigt auf der Antriebswelle (3), die mittels der Kupplungsverzahnung (7) mit der Eingangswelle (2) verbunden ist, ausgebildet.

An den beiden **M**otoren (M₂, M₃) sind stufenlos veränderbare Umdrehungen und Eingangsleistung möglich, an der angetriebenen Ausgangswelle (6) wird eine stufenlose Änderung der Umdrehungen und der Leistung bei veränderbaren Übersetzung erreicht.

Dadurch wird die gleichmäßige Gabelung der Leistung an die einzelnen Umlaufräder erreicht (14, 15, 16), (17, 18, 19).

### Bezugsbezeichnungen:

- 1: Getriebe
- 2: Eingangswelle
- 3: Antriebswelle
- M₂: **erster** Motor
- M₃: **zweiter** Motor
- 4: Zusatzantrieb
- 5: Welle des Zusatzantriebes 4
- 6, 44, 45: Ausgangswelle
- 7: Wellenkopplung
- 8: Getriebestufe
- 9: Vorstufe
- 10: Planetenstufe
- 11: Ausgleichsmechanismus
- 12: Planetenräderwerk
- 13: Zentralrad
- 14, 15, 16: einfache Umlaufräder
- 17, 18, 19: doppelte Umlaufräder
- 20: Umlaufräderschelle
- 21: Welle der Umlaufräderschelle 20
- 22: Flansch
- 23: Kronenrad
- 24: Welle des Kronenrads 23
- 25, 26: Stirnflächen
- 27: Außenverzahnung des Kronenrads 23
- 28: Treibrad
- 29: Antriebsrad
- 30, 31: Zahnradvorgelege
- 32, 33: Welle der Zahnradvorgelege 30, 31
- 34: zweites Zentralrad
- 35: Welle der einfachen Umlaufräder 14, 15, 16
- 36: Welle der doppelten Umlaufräder 17, 18, 19
- 37: Kupplung
- 38, 39: Getriebezweig
- 40, 41: Zwischenzahnrad
- 42, 43: letztes getriebenes Rad
- **44, 45**: **Ausgangswellen**
- 46: Stützring
- 47: Zwischenrad
- 48: Lasche
- 49, 50, 51, 52: Zahnradvorgelegen zweier Getriebezweige 38, 39
- 53, 54, 55, 56: Welle der Zahnradvorgelege 49, 50, 51, 52
- 57: Gabelungsstufe
- 58: Eingangsrad
- 59: Einbaurad
- 60: Sicherungsschraube

## Patentansprüche

1. **Getriebemotoranordnung mit einem von zwei Motoren (M2, M3) angetriebenem** Getriebe, umfassend eine Überlagerungsgetriebeeinrichtung, insbesondere Differentialgetriebeeinrichtung, umfassend ein Planetenräderwerk (12) **mit Kronenrad (23), Umlaufrädern (14, 15, 16), und Planetenträger,**
wobei über zwei eintreibende Wellen (3, 21) des Getriebes Drehmomentflüsse mittels des Planetenräderwerks (12) zusammenführbar sind,
wobei eine erste der eintreibenden Wellen (3) ein Zentralrad (13), insbesondere Sonne, des Planetenräderwerks (12) antreibt, wobei **das Zentralrad (13) in einem ersten axialen Bereich der ersten eintreibenden Welle (3) angeordnet ist und dort drehfest mit dieser verbunden ist oder einstückig mit dieser ausgeführt ist,**
wobei die zweite eintreibende Welle (21) den Planetenträger, an dem die mit dem Zentralrad (13) und dem Kronenrad (23) im Eingriff stehenden Planeten, also Umlaufräder (14, 15, 16), des Planetenräderwerks (12) gelagert sind, antreibt, oder
wobei die zweite eintreibende Welle das Kronenrad (23) über eine Kupplung antreibt, mit dem die auch mit dem Zentralrad (13) in Eingriff stehenden Umlaufräder (14, 15, 16) im Eingriff stehen, oder
wobei die zweite eintreibende Welle (21) eine Verzahnung trägt, welche eine am Kronenrad (23) vorgesehene Außenverzahnung antreibt, wobei die auch mit dem Zentralrad (13) in Eingriff stehenden Umlaufräder mit der Innenverzahnung des Kronenrades (23) im Eingriff stehen, und
wobei zumindest eine abtreibende Welle (24) der Überlagerungsgetriebeeinrichtung eintreibende Welle eines ein- oder mehrstufigen Parallelwellengetriebes ist,
**dadurch gekennzeichnet, dass**
die erste eintreibende Welle (3) frei gelagert ist, indem sie
- in **dem** ersten axialen Bereich **über das Zentralrad (13)** an **drei** Umlaufrädern (14, 15, 16) des Planetenräderwerks (12) gelagert ist
- und in einem zweiten axialen Bereich über eine Wellenkupplung (7) an einer eintreibenden Vorrichtung gelagert ist, **nämlich** an einer **W**elle (2) **eines ersten Motors (M2) der beiden Motoren, der als Elektromotor ausgeführt ist,**
wobei **die erste eintreibende Welle (3) im Bereich der Wellenkupplung (7) eine Außenverzahnung aufweist, die in eine ballig ausgeführte Innenverzahnung der Welle (2) der eintreibenden Vorrichtung (M2)** eingreift.

2. **Getriebemotoranordnung** nach Anspruch 1,
**dadurch gekennzeichnet, dass**
**die Umlaufräder (14, 15, 16) als Stufenplaneten ausgeführt sind, wobei das Zentralrad (13) mit der ersten Verzahnungsstufe der Stufenplaneten und ein weiteres, abtriebseitigeres Teil mit der zweiten Verzahnungsstufe der Stufenplaneten im Eingriff ist.**

3. **Getriebemotoranordnung** nach einem der vorangegangenen Ansprüche, **dadurch gekennzeichnet, dass**
an einer der eintreibenden Wellen (3, 21) ein Stirnrad drehbar gelagert ist, das von einer Stirnradstufe umfasst ist, welcher Leistungsfluss vom Überlagerungsgetriebe zuführbar ist, insbesondere wobei **der abtriebsseitig abgeleitete Leistungsfluss der als Überlagerungsgetriebe ausgeführten Getriebemotoranordnung** aufgeteilt wird, insbesondere so dass zwei Abtriebswellen (6) am Getriebe zur Verfügung stehen.

4. **Als Differentialgetriebemotoreinrichtung ausgeführte Getriebemotoranordnung** nach einem der vorangegangenen Ansprüche, mit Ausgleichsmechanismus mit eingebautem Planetenräderwerk mit Stirnzahnrädern und **mit** den **zwei antreibenden Motoren (M2, M3), dadurch gekennzeichnet, dass**
die Differentialgetriebeeinrichtung mindestens aus drei Getriebestufen (8), und zwar mit dem Planetenräderwerk (12), gebildet aus einer, maximal zwei Planetenstufen (10), platziert auf der Antriebswelle (3),
wobei durch eine Planetenstufe (10) das Planetenräderwerk (12) mit einfachen Umlaufräder (14, 15, 16) gebildet ist, während die Haupteile des Planetenräderwerks (12) gleichzeitig rotierendes Zentralrad (13), Umlaufräderschelle (20) sind und bei Planetenräderwerk (12) mit einfachen Umlaufräder (14, 15, 16) das Kronenrad (23) und bei Planetenräderwerk (12) mit doppelten Umlaufräder (17, 18, 19) das Kronenrad (23),
wobei der Antriebsteil immer das Zentralrad (13) ist, der zweite Antriebsteil ist die Umlaufräderschelle (20),
wobei das Antriebsrad (29) ist in gleichzeitigen permanenten Eingriff in der horizontalen Ebene mit zwei Zwischenzahnrädern (40), mit welchen die Getriebegabelungsstufe (57) für die Zusammensetzung von zwei Getriebezweigen (38, 39) ausgebildet ist, wovon jeder Getriebezweig (38, 39) durch ein Zahnradvorgelege (49) mit den Zwischenzahnrädern (40, 41) ausgebildet ist, ein Zahnradvorgelege (50, 51, 52) mit den Getriebestufen (8), die im Eingriff mit zwei letzten angetriebenen Rädern (42, 43) der Ausgangswelle (44, 45) sind, wobei sämtliche Stirnzahnräder mit einfachem Schrägverzahnung projektiert sind, und zwar bei der Bildung des Ausgleichsmechanismus (11), der aus der freien Lagerung des Zentralrads (13) besteht, ohne Lager, zwischen den drei Umlaufräder (14, 15, 16), befestigt auf der Antriebswelle (3), die mittels der Wellenkopplung (7) mit der Eingangswelle (2), mit axialen Sicherung, bei gleichmäßiger Gabelung der Leistung an einzelne Umlaufräder (14, 15, 16), (17, 18, 19) und weiter ist der Ausgleichsmechanismus (11) gebildet durch die Wellen (21) der Umlaufräderschelle (20), die Welle (24) des Kronenrads (23), die Welle (5) des zweiten Motors (M3), Wellen (32, 33) der Zahnradvorgelegen (30, 31), und die Ausgangswellen (6, 44, 45), bestückt mit der Wälzlagerung mit der axialen Beweglichkeit bei der eindeutigen Kräftebestimmung in Eingriffen der einzelnen Zahnrädern ausgebildet ist.

5. Getriebemotoranordnung nach einem der vorangegangenen Ansprüche, **dadurch gekennzeichnet, dass**
**eine** Vorstufe (9) vor einem der Antriebsteile des Planetenräderwerks (12) angeschlossen ist, wo die Vorstufe (9) durch ein Zahnrad ausgebildet ist.

6. Getriebemotoranordnung nach einem der vorangegangenen Ansprüche, **dadurch gekennzeichnet, dass**
das Planetenräderwerk (12) mit den einfachen Umlaufräder (14, 15, 16) durch eine Planetenstufe (10), platziert auf der Antriebswelle (3), immer aus drei Umlaufräder zusammengesetzt (14, 15, 16) aus den Stirnzahnrädern mit einfacher Winkel-Außenverzahnung mit gleichem Durchmesser, eingegliedert zwischen das Zentralrad (13) und das Kronenrad (23), gelagert auf der Umlaufräderschelle (20) mit der Rotationsbeweglichkeit, ausgebildet ist.

7. Getriebemotoranordnung nach einem der vorangegangenen Ansprüche, **dadurch gekennzeichnet, dass**
das Planetenräderwerk (12) mit den doppelten Umlaufräder (17, 18, 19) durch zwei Planetenstufen (10) auf der Antriebswelle (3) platziert, immer aus drei Umlaufräder zusammengesetzt (17, 18, 19) aus den Stirnzahnrädern mit einfacher Winkel-Außenverzahnung, mit größerem und kleinerem Durchmesser, zusammen mittels der Wellen (36) der Umlaufräder (17, 18, 19) verbunden, eingegliedert bei der Ausführung epi - hypo zwischen das Zentralrad (13) der ersten Planetenstufe (10) und das Kronenrad (23) der zweiten Planetenstufe (10) und bei der Ausführung epi - epi zwischen das Zentralrad (13) der ersten Planetenstufe (10) und das zweite Zentralrad (34) der zweiten Planetenstufe (10) mit der Außenverzahnung, wo die doppelten Umlaufräder (17, 18, 19) auf der Umlaufräderschelle (20) mit der Rotationsbeweglichkeit gelagert sind, ausgebildet ist.

8. Getriebemotoranordnung nach einem der vorangegangenen Ansprüche, **dadurch gekennzeichnet, dass**
an die Eingangswelle (2) und die Welle (5) die Antriebsmotoren (M₂ und M₃), mit den stufenlos veränderbaren Umdrehungen und Eingangsleistung, angeschlossen sind, und an eine angetriebene Ausgangswelle (6, 44, 45) eine angetriebene Maschinen, in einer Getriebezweigen (38, 39) angeschlossen sind, mit der stufenlosen Änderung der Umdrehungen und der Leistung bei den stufenlos veränderbaren Übersetzungen, wobei auf den Wellen der Motoren (M₂) und (M₃) die Blockierungsbremsmechanismen installiert sind, wo nach der Abbremsung der Eingangswelle (2) die Differentialgetriebeeinrichtung als ein Getriebe betrieben wird.

9. Getriebemotoranordnung nach einem der vorangegangenen Ansprüche, **dadurch gekennzeichnet, dass**
beim Ausgleichsmechanismus (11) die Wellenkopplung (7) mit der axialen Sicherung durch die Kupplungsverzahnung ausgebildet ist und dabei die Antriebswelle (3) axial an die bombierte Stirnfläche der Eingangswelle (2) gestützt ist, und gleichzeitig axial mittels des an die Eingangswelle (2) angeschraubten Stützrings (46) gesichert ist und axial mittels der Achsensicherungsschraube (60) der Lasche (48) gesichert ist, wobei ein Teil des Ausgleichsmechanismus (11) die Wälzlagerungen, die mit zweireihigen Schrägrollenlagern mit der durch Betriebsspiel der Lager gegebenen axialen Beweglichkeit, bestückt ist.

10. Getriebemotoranordnung nach einem der vorangegangenen Ansprüche, **dadurch gekennzeichnet, dass**
die Antriebswelle (3) des Zentralrads (13) zusammen mit der Eingangswelle (2) und der Welle (5) des zweiten Motors (M3) koaxial mit dem Treibrad (28), im Eingriff mit der Außenverzahnung (27) des Kronenrads (23), parallel, wo die angetriebene Ausgangswellen (6, 44, 45) mit einem Wellenende ausgearbeitet sind, wenn eine Ausgangswelle (6) auf einem Wellenende mit der angetriebenen Maschine bestückt ist und wenn zwei Ausgangswellen (44, 45) zweier Getriebezweigen (38, 39) auf einem Wellenende einer Ausgangswelle (44) mit der angetriebenen Maschine und auf einem Wellenende zweiter Ausgangswelle (45) mit zweiten Maschine, bestückt sind, bei der Verteilung des Leistungsflusses, angeordnet sind.

11. Getriebemotoranordnung nach einem der vorangegangenen Ansprüche, **dadurch gekennzeichnet, dass** gemäß der Anzahl der Zahnradvorgelegen (30, 31, 49, 50, 51, 52) mit den befestigten Getriebestufen (8) eine höhere Übersetzung erreicht ist und gemäß der Platzierung dieser Zahnradvorgelegen (30, 31, 49, 50, 51, 52) in der Grundrissfläche das Getriebegehäuse (1) längliche Achsenverlängerung formgestaltet ist.

12. Getriebemotoranordnung nach einem der vorangegangenen Ansprüche, **dadurch gekennzeichnet, dass** das Zentralrad (13) des Planetenräderwerks (12) zusammen mit der Antriebswelle (3) aus einem Stück ausgebildet ist, dass das Treibrad (28) zusammen mit der Welle (5) des zweiten Motors (M3) aus einem Stück ausgebildet ist, und dass die kleinere Räder von den Zahnräder der Zahnradvorgelegen (30, 31, 49, 50, 51, 52) zusammen mit den Wellen (32, 33, 53, 54, 55, 56) der Zahnradvorgelegen (30, 31, 49, 50, 51, 52) aus einem Stück ausgebildet sind,

13. Getriebemotoranordnung nach einem der vorangegangenen Ansprüche, **dadurch gekennzeichnet,**
die Umlaufräderschelle (20) zusammen mit der Welle (21) der Umlaufräderschelle (20) aus einem Stück ausgebildet sind, wobei die Umlaufräderschelle (20) als geteilte Einheit mit dem angeschraubten und mittels **Stiften** gesicherten Flansch (22) ausgebildet ist, wo das Kronenrad (23) als geteilte Einheit mit den angeschraubten Stirnen (25, 26) ausgebildet ist und dabei der Stirn (25) auf der Umlaufräderschelle (20) und zweiter Stirn (26) auf dem Flansch (22) der Umlaufräderschelle (20) gelagert ist.

## Claims

1. A geared motor arrangement with a gear unit driven by two motors (M2, M3), comprising a superposition gear means, in particular differential gear means, comprising a planetary gear set (12) with crown wheel (23), planet wheels (14, 15, 16) and pinion cage,
wherein torque flows can be brought together by means of the planetary gear set (12) by way of two input shafts (3, 21) of the gear unit,
wherein a first one of the input shafts (3) drives a central wheel (13), in particular a sun wheel, of the planetary gear set (12),
wherein
the central wheel (13) is arranged in a first axial region of the first input shaft (3) and is connected thereto there in rotation-resistant manner or is formed in one piece therewith,
wherein the second input shaft (21) drives the pinion cage, on which the planets, i.e. planet wheels (14, 15, 16), of the planetary gear set (12) which are engaged with the central wheel (13) and the crown wheel (23) are mounted, or
wherein the second input shaft drives the crown wheel (23) by way of a coupling, with which wheel the planet wheels (14, 15, 16) which are also engaged with the central wheel (13) are engaged, or
wherein the second input shaft (21) bears gearing which drives external gearing which is provided on the crown wheel (23), wherein the planet wheels which are also engaged with the central wheel (13) are engaged with the internal gearing of the crown wheel (23), and
wherein at least one output shaft (24) of the superposition gear means is the input shaft of a single-stage or multi-stage parallel-shaft gear,
**characterised in that**
the first input shaft (3) is freely mounted, **in that**
- in the first axial region it is arranged by way of the central wheel (13) on three planet wheels (14, 15, 16) of the planetary gear set (12)
- and in a second axial region it is mounted on an input device by way of a shaft coupling (7), namely on a shaft (2) of a first motor (M2) of the two motors which is embodied as an electric motor,
the first input shaft (3) in the region of the shaft coupling (7) having external gearing which engages in internal gearing of the shaft (2) of the input device (M2) which is formed crowned.

2. A geared motor arrangement according to Claim 1,
**characterised in that**
the planet wheels (14, 15, 16) are formed as stepped planets, with the central wheel (13) being engaged with the first gearing stage of the stepped planets and a further part, more to the output side, being engaged with the second gearing stage of the stepped planets.

3. A geared motor arrangement according to one of the preceding claims,
**characterised in that**
a spur wheel is rotatably mounted on one of the input shafts (3, 21), which wheel is comprised by a spur wheel stage, to which power flow can be supplied from the superposition gear, in particular wherein
the power flow, transferred on the output side, of the geared motor arrangement which is formed as a superposition gear is split, in particular so that two output shafts (6) are available on the gear unit.

4. A geared motor arrangement formed as a differential geared motor arrangement according to one of the preceding claims,
with compensation mechanism with the installed planetary gear set with spur gear wheels and with the two driving motors (M2, M3),
**characterised in that**
the differential gear means is formed at least from three gear stages (8), namely with the planetary gear set (12), formed from one, at most two, planetary stage(s) (10), placed on the drive shaft (3),
wherein the planetary gear set (12) is formed with single planet wheels (14, 15, 16) by a planetary stage (10), while the main parts of the planetary gear set (12) are simultaneously rotating central wheel (13), planet wheel shell (20) and for planetary gear set (12) with single planet wheels (14, 15, 16) the crown wheel (23) and for planetary gear set (12) with double planet wheels (17, 18, 19) the crown wheel (23),
wherein the driving part is always the central wheel (13), the second driving part is the planet wheel shell (20),
wherein the drive wheel (29) is in simultaneous permanent engagement in the horizontal plane with two intermediate gear wheels (40) with which the gear bifurcation stage (57) is formed for the configuration of two gear branches (38, 39), of which each gear branch (38, 39) is formed by a gear train (49) with the intermediate gear wheels (40, 41), a gear train (50, 51, 52) with the gear stages (8) which are in engagement with two last driven wheels (42, 43) of the output shaft (44, 45),
wherein all the spur gear wheels are configured with simple helical gearing, namely upon the formation of the compensation mechanism (11), which consists of the free mounting of the central wheel (13), without bearings, between the three planet wheels (14, 15, 16), fastened to the drive shaft (3), which is connected by means of the shaft coupling (7) to the input shaft (2), with axial securing, with uniform bifurcation of the output to individual planet wheels (14, 15, 16), (17, 18, 19), and furthermore the compensation mechanism (11) is formed by the shafts (21) of the planet wheel shell (20), the shaft (24) of the crown wheel (23), the shaft (5) of the second motor (M3),
shafts (32, 33) of the gear trains (30, 31), and the output shafts (6, 44, 45), equipped with the rolling bearing mounting with the axial mobility in the unambiguous determination of forces is formed in engagements of the individual gear wheels.

5. A geared motor arrangement according to one of the preceding claims,
**characterised in that**
a preliminary stage (9) is connected in front of one of the driving parts of the planetary gear set (12), where the preliminary stage (9) is formed by a gear wheel.

6. A geared motor arrangement according to one of the preceding claims,
**characterised in that**
the planetary gear set (12) with the single planet wheels (14, 15, 16) is formed by a planetary stage (10), placed on the drive shaft (3), always composed of three planet wheels (14, 15, 16) of the spur gear wheels with simple angled external gearing, with the same diameter, incorporated between the central wheel (13) and the crown wheel (23), mounted on the planet wheel shell (20) with the rotational mobility.

7. A geared motor arrangement according to one of the preceding claims,
**characterised in that**
the planetary gear set (12) with the double planetary wheels (17, 18, 19) is formed by two planetary stages (10) placed on the drive shaft (3), always composed of three planet wheels (17, 18, 19) of the spur gear wheels with simple angled external gearing, with larger and smaller diameter, connected together by means of the shafts (36) of the planetary wheels (17, 18, 19), incorporated in the epi-hypo embodiment between the central wheel (13) of the first planetary stage (10) and the crown wheel (23) of the second planetary stage (10), and in the epi-epi embodiment between the central wheel (13) of the first planetary stage (10) and the second central wheel (34) of the second planetary stage (10) with the external gearing, where the double planet wheels (17, 18, 19) are mounted on the planet wheel shell (20) with the rotational mobility.

8. A geared motor arrangement according to one of the preceding claims,
**characterised in that**
the drive motors (M₂ and M₃), with the infinitely variable revolutions and input power, are connected to the input shaft (2) and the shaft (5), and a driven machines [sic], in a gear branches [sic] (38, 39), are connected to a driven output shaft (6, 44, 45), with the infinitely variable change in the revolutions and in the output with the infinitely variable transmission ratios, with the locking braking mechanisms being installed on the shafts of the motors (M₂) and (M₃), where after the braking of the input shaft (2) the differential gear means is operated as a gear unit.

9. A geared motor arrangement according to one of the preceding claims,
**characterised in that**
in the compensation mechanism (11) the shaft coupling (7) is formed with the axial securing by the coupling gearing and in so doing the drive shaft (3) is axially supported on the cambered end face of the input shaft (2), and at the same time is axially secured by means of the supporting ring (46) screwed on to the input shaft (2), and is axially secured by means of the axle securing screw (60) of the tab (48), wherein part of the compensation mechanism (11) the rolling bearing mountings which is equipped with two-tier tapered roller bearings with the axial mobility supplied by operating play of the bearings [sic].

10. A geared motor arrangement according to one of the preceding claims,
**characterised in that**
the drive shaft (3) of the central wheel (13) together with the input shaft (2) and the shaft (5) of the second motor (M3) are arranged coaxially with the driving wheel (28), engaged with the external gearing (27) of the crown wheel (23), parallel, where the driven output shafts (6, 44, 45) are hollowed out with a shaft end if an output shaft (6) on one shaft end is equipped with the driven machine, and if two output shafts (44, 45) of two gear branches (38, 39) on one shaft end of an output shaft (44) are equipped with the driven machine and on a shaft end of second output shaft (45) with second machine, in the distribution of the power flow.

11. A geared motor arrangement according to one of the preceding claims,
**characterised in that** in accordance with the number of gear trains (30, 31, 49, 50, 51, 52) with the fastened gear stages (8) a higher transmission ratio is achieved and in accordance with the placement of these gear trains (30, 31, 49, 50, 51, 52) in the ground-plan area the gear unit housing (1) is formed the elongate axis extension [sic].

12. A geared motor arrangement according to one of the preceding claims,
**characterised in that** the central wheel (13) of the planetary gear set (12) together with the drive shaft (3) is formed from a single piece, **in that** the driving wheel (28) together with the shaft (5) of the second motor (M3) is formed from a single piece, and **in that** the smaller wheels of the gear wheels of the gear trains (30, 31, 49, 50, 51, 52) together with the shafts (32, 33, 53, 54, 55, 56) of the gear trains (30, 31, 49, 50, 51, 52) are formed from a single piece.

13. A geared motor arrangement according to one of the preceding claims,
**characterised in that**
the planet wheel shell (20) together with the shaft (21) of the planet wheel shell (20) are formed from a single piece, the planet wheel shell (20) being formed as a divided unit with the screwed-on flange (22) which is secured by means of pins, where the crown wheel (23) is formed as a divided unit with the screwed-on ends (25, 26) and in so doing the end (25) is mounted on the planet wheel shell (20) and second end (26) on the flange (22) of the planet wheel shell (20).

## Revendications

1. Agencement de motoréducteur comportant une transmission entraînée par deux moteurs (M2, M3), comprenant un système de transmission à superposition, en particulier un système de transmission différentielle, comprenant un train épicycloïdal (12) avec une couronne dentée (23), des roues planétaires (14, 15, 16) et un porte-satellites,
dans lequel des flux de couple peuvent être réunis au moyen du train épicycloïdal par l'intermédiaire de deux arbres menants (3, 21) de la transmission,
dans lequel un premier des arbres menants (3) entraîne une roue centrale (13), en particulier une roue solaire, du train épicycloïdal (12),
dans lequel la roue centrale (13) est disposée dans une première zone axiale du premier arbre menant (3) et y est reliée de manière solidaire en rotation ou est réalisée d'une seule pièce avec celui-ci,
dans lequel le deuxième arbre menant (21) entraîne le porte-satellites sur lequel sont montés les satellites, c'est-à-dire les roues planétaires (14, 15, 16) du train épicycloïdal (12), qui sont en prise avec la roue centrale (13) et la couronne dentée (23), ou
dans lequel le deuxième arbre menant entraîne, par l'intermédiaire d'un embrayage, la couronne dentée (23) avec laquelle les roues planétaires (14, 15, 16), qui sont également en prise avec la roue centrale (13), sont en prise, ou
dans lequel le deuxième arbre menant (21) porte une denture qui entraîne une denture extérieure prévue sur la couronne dentée (23), les roues planétaires qui sont également en prise avec la roue centrale (13) étant en prise avec la denture intérieure de la couronne dentée (23), et
dans lequel au moins un arbre mené (24) du système de transmission à superposition est un arbre menant d'une transmission à arbres parallèles à un ou plusieurs étages, **caractérisé en ce que**
le premier arbre menant (3) est monté librement
- en étant monté dans la première zone axiale, par l'intermédiaire de la roue centrale (13), sur trois roues planétaires (14, 15, 16) du train épicycloïdal (12) et
- en étant monté dans une deuxième zone axiale, par l'intermédiaire d'un accouplement d'arbre (7), sur un dispositif menant, à savoir sur un arbre (2) d'un premier moteur (M2) des deux moteurs, qui est réalisé sous la forme d'un moteur électrique,
dans lequel le premier arbre menant (3) présente dans la zone de l'accouplement d'arbre (7) une denture extérieure qui est en prise avec une denture intérieure bombée de l'arbre (2) du dispositif menant (M2).

2. Agencement de motoréducteur selon la revendication 1,
**caractérisé en ce que**
les roues planétaires (14, 15, 16) sont réalisées sous la forme de satellites étagés, la roue centrale (13) étant en prise avec le premier étage de denture des satellites étagés et une autre partie, plus proche de la sortie, étant en prise avec le deuxième étage de denture des satellites étagés.

3. Agencement de motoréducteur selon l'une des revendications précédentes,
**caractérisé en ce**
**qu'**une roue droite est montée rotative sur l'un des arbres menant (3, 21), laquelle est comprise par un étage à roues droites auquel un flux de puissance peut être amené par la transmission à superposition, en particulier dans lequel le flux de puissance dérivé côté sortie de l'agencement de motoréducteur réalisé sous la forme d'une transmission à superposition est divisé, en particulier de telle sorte que deux arbres de sortie (6) soient disponibles sur la transmission.

4. Agencement de motoréducteur réalisé sous la forme d'un système de motoréducteur différentiel selon l'une des revendications précédentes,
avec un mécanisme de compensation avec train épicycloïdal intégré à roues dentées droites et avec les deux moteurs d'entraînement (M2, M3),
**caractérisé en ce que**
le système de transmission différentielle se compose d'au moins trois étages de transmission (8), à savoir avec le train épicycloïdal (12), formé d'un, au maximum de deux étages planétaires (10), placé sur l'arbre d'entraînement (3),
dans lequel le train épicycloïdal (12) à roues planétaires simples (14, 15, 16) est formé par un étage planétaire (10), tandis que les parties principales du train épicycloïdal (12) sont la roue centrale (13) tournant simultanément, le porte-satellites (20) et dans le cas du train épicycloïdal (12) à roues planétaires simples (14, 15, 16) la couronne dentée (23) et dans le cas du train épicycloïdal (12) à roues planétaires doubles (17, 18, 19) la couronne dentée (23),
dans lequel la partie menante est toujours la roue centrale (13), la deuxième partie menante est le porte-satellites (20),
dans lequel la roue menante (29) est en prise permanente simultanée dans le plan horizontal avec deux roues dentées intermédiaires (40) avec lesquelles est formé l'étage de bifurcation de transmission (57) pour la composition de deux branches de transmission (38, 39), chaque branche de transmission (38, 39) étant formée par un train d'engrenages (49) avec les roues dentées intermédiaires (40, 41), un train d'engrenages (50, 51, 52) avec les étages de transmission (8) qui sont en prise avec les deux dernières roues menées (42, 43) de l'arbre de sortie (44, 45),
dans lequel toutes les roues dentées droites sont conçues avec une denture hélicoïdale simple, à savoir pour la formation du mécanisme de compensation (11) constitué par le montage libre de la roue centrale (13), sans palier, entre les trois roues planétaires (14, 15, 16), fixée sur l'arbre d'entraînement (3) qui est relié au moyen de l'accouplement d'arbre (7) à l'arbre d'entrée (2) avec blocage axial, avec une bifurcation uniforme de la puissance aux différentes roues planétaires (14, 15, 16), (17, 18, 19), et le mécanisme de compensation (11) est en outre formé par les arbres (21) du porte-satellites (20), l'arbre (24) de la couronne dentée (23), l'arbre (5) du deuxième moteur (M3), les arbres (32, 33) des trains d'engrenages (30, 31) et les arbres de sortie (6, 44, 45), équipés de paliers à roulement à mobilité axiale permettant la détermination non ambiguë des forces dans l'engrènement des différentes roues dentées.

5. Agencement de motoréducteur selon l'une des revendications précédentes,
**caractérisé en ce**
**qu'**un étage préliminaire (9) est relié avant l'une des parties menantes du train épicycloïdal (12), l'étage préliminaire (9) étant formé par une roue dentée.

6. Agencement de motoréducteur selon l'une des revendications précédentes,
**caractérisé en ce que**
le train épicycloïdal (12) avec les roues planétaires simples (14, 15, 16) est formé par un étage planétaire (10), placé sur l'arbre d'entraînement (3), toujours composé de trois roues planétaires (14, 15, 16) constituées de roues dentées droites à denture extérieure angulaire simple de même diamètre, incorporées entre la roue centrale (13) et la couronne dentée (23), montées sur le porte-satellites (20) avec la mobilité en rotation.

7. Agencement de motoréducteur selon l'une des revendications précédentes,
**caractérisé en ce que**
le train épicycloïdal (12) avec les roues planétaires doubles (17, 18, 19) est formé par deux étages planétaires (10) placés sur l'arbre d'entraînement (3), toujours composés de trois roues planétaires (17, 18, 19) constituées de roues dentées droites à denture extérieur angulaire simple, de plus grand et plus petit diamètre, reliées entre elles au moyen des arbres (36) des roues planétaires (17, 18, 19), incorporées dans la version épi - hypo entre la roue centrale (13) du premier étage planétaire (10) et la couronne dentée (23) du deuxième étage planétaire (10) et dans la version épi-épi entre la roue centrale (13) du premier étage planétaire (10) et la deuxième roue centrale (34) du deuxième étage planétaire (10) avec la denture extérieure, les roues planétaires doubles (17, 18, 19) étant montées sur le porte-satellites (20) avec la mobilité en rotation.

8. Agencement de motoréducteur selon l'une des revendications précédentes,
**caractérisé en ce**
**qu'**à l'arbre d'entrée (2) et à l'arbre (5) sont reliés les moteurs d'entraînement (M₂ et M₃), à vitesse de rotation et puissance d'entrée variables en continu, et à un arbre de sortie mené (6, 44, 45) est reliée une machine menée, dans une branche de transmission (38, 39), avec variation continue de la vitesse de rotation et de la puissance aux rapports de transmission variables en continu, dans lequel sur les arbres des moteurs (M₂) et (M₃) sont installés les mécanismes de freinage de blocage qui, après le freinage de l'arbre d'entrée (2), provoquent le fonctionnement du système de transmission différentielle comme une transmission.

9. Agencement de motoréducteur selon l'une des revendications précédentes,
**caractérisé en ce que**
dans le mécanisme de compensation (11), l'accouplement d'arbre (7) avec blocage axial est formé par la denture d'accouplement et l'arbre d'entraînement (3) est supporté axialement sur la face frontale bombée de l'arbre d'entrée (2), et en même temps bloqué axialement au moyen de la bague d'appui (46) vissée sur l'arbre d'entrée (2) et bloqué axialement au moyen de la vis de blocage d'axe (60) de la patte (48), une partie du mécanisme de compensation (11) étant formée par les paliers à roulement qui sont équipés de paliers à rouleaux obliques sur deux rangées ayant la mobilité axiale donnée par le jeu de fonctionnement des paliers.

10. Agencement de motoréducteur selon l'une des revendications précédentes,
**caractérisé en ce que**
l'arbre d'entraînement (3) de la roue centrale (13) avec l'arbre d'entrée (2) et l'arbre (5) du deuxième moteur (M3) sont disposés coaxialement, avec la roue menante (28), en prise avec la denture extérieure (27) de la couronne dentée (23) en parallèle, les arbres de sortie menés (6, 44, 45) étant réalisés avec un bout d'arbre, lorsqu'un arbre de sortie (6) est équipé à un bout d'arbre de la machine entraînée et lorsque deux arbres de sortie (44, 45) de deux branches de transmission (38, 39) sont équipés à un bout d'arbre d'un arbre de sortie (44) de la machine entraînée et à un bout d'arbre du deuxième arbre de sortie (45) d'une deuxième machine, en ce qui concerne la répartition du flux de puissance.

11. Agencement de motoréducteur selon l'une des revendications précédentes,
**caractérisé en ce que**
suivant le nombre de trains d'engrenages (30, 31, 49, 50, 51, 52) avec les étages de transmission (8) fixés, on obtient un rapport de transmission plus élevé et suivant le placement de ces trains d'engrenages (30, 31, 49, 50, 51, 52) dans la surface de projection horizontale, le carter de transmission (1) est formé selon l'extension de l'axe longitudinal.

12. Agencement de motoréducteur selon l'une des revendications précédentes,
**caractérisé en ce que**
la roue centrale (13) du train épicycloïdal (12) est formée d'une seule pièce avec l'arbre d'entraînement (3), que la roue menante (28) est formée d'une seule pièce avec l'arbre (5) du deuxième moteur (M3) et que les plus petites roues des roues dentées des trains d'engrenages (30, 31, 49, 50, 51, 52) sont formées d'une seule pièce avec les arbres (32, 33, 53, 54, 55, 56) des trains d'engrenages (30, 31, 49, 50, 51, 52).

13. Agencement de motoréducteur selon l'une des revendications précédentes,
**caractérisé en ce que**
le porte-satellites (20) est formé d'une seule pièce avec l'arbre (21) du porte-satellites (20), le porte-satellites (20) étant réalisé sous la forme d'une unité divisée avec la bride (22) vissée et bloquée au moyen de goupilles, la couronne dentée (23) étant réalisée sous la forme d'une unité divisée avec les faces vissées (25, 26) et la face (25) étant montée sur le porte-satellites (20) et la deuxième face (26) sur la bride (22) du porte-satellites (20).
